# EUROPÄISCHE PATENTSCHRIFT

(11) **EP 2 442 640 B1**
(45) Veröffentlichungstag und Bekanntmachung des Hinweises auf die Patenterteilung: **13.03.2013**
(21) Anmeldenummer: 10724320.6
(22) Anmeldetag: 14.06.2010
(51) Int. Cl.: A01N 1/00

(54) **VERFAHREN UND VORRICHTUNG ZUR KONSERVIERUNG VON TIEFSEE-ORGANISMEN**
METHOD AND APPARATUS FOR CONSERVING DEEP-SEA ORGANISMS
PROCÉDÉ ET DISPOSITIF PERMETTANT DE CONSERVER DES ORGANISMES ABYSSAUX

(30) Priorität: 17.06.2009 DE 102009025268
(43) Veröffentlichungstag der Anmeldung: 25.04.2012
(73) Patentinhaber: Fraunhofer-Gesellschaft zur Förderung der angewandten Forschung e.V., 80686 München (DE)
(72) Erfinder: FUHR, Günter, 13187 Berlin (DE); ZIMMERMANN, Heiko, 66386 St. Ingbert (DE); KRUSE, Charli, 23923 Herrnburg (DE); LEMOR, Robert, 66121 Saarbrücken (DE)
(74) Vertreter: Hertz, Oliver
(86) Internationale Anmeldenummer: PCT/EP2010/003558
(87) Internationale Veröffentlichungsnummer: WO 2010/145791

(56) Entgegenhaltungen:
- WO-A2-2007/060608
- JP-A- 2004 166 575
- US-A1- 2007 087 321
- KOYAMA S ET AL: "Pressure-stat aquarium system designed for capturing and maintaining deep-sea organisms", DEEP SEA RESEARCH. PART 1. OCEANOGRAPHIC RESEARCH PAPERS, Bd. 49, Nr. 11, 1. November 2002 (2002-11-01), Seiten 2095-2102, XP009149271, PERGAMON PRESS, OXFORD, GB ISSN: 0967-0637, DOI: 10.1016/S0967-0637(02)00098-5 [gefunden am 2002-12-13]
- SHILLITO B ET AL: "Live capture of megafauna from 2300m depth, using a newly designed Pressurized Recovery Device", DEEP SEA RESEARCH. PART 1. OCEANOGRAPHIC RESEARCH PAPERS, Bd. 55, Nr. 7, 1. Juli 2008 (2008-07-01), Seiten 881-889, XP022713459, PERGAMON PRESS, OXFORD, GB ISSN: 0967-0637, DOI: 10.1016/J.DSR.2008.03.010 [gefunden am 2008-04-06]
- PRADILLON F ET AL: "Pressure vessels for in vivo studies of deep-sea fauna", HIGH PRESSURE RESEARCH, Bd. 24, Nr. 2, 1. Juni 2004 (2004-06-01), Seiten 237-246, XP009149262, GORDON AND BREACH, NEW YORK, NY, US ISSN: 0895-7959, DOI: 10.1080/08957950410001699818
- Lever A: "Live fish caught at record depth", BBC news, 31. Juli 2008 (2008-07-31), XP002641241, Gefunden im Internet: URL:http://news.bbc.co.uk/2/hi/science/nat ure/7525552.stm [gefunden am 2011-06-09]

## Beschreibung

Die Erfindung betrifft ein Verfahren zur Konservierung von biologischem Material in der Tiefsee, insbesondere ein Verfahren zum Fangen oder Sammeln von mindestens einem biologischen Organismus in der Tiefsee und dessen Überführung in eine Umgebung mit Normaldruck. Des Weiteren betrifft die Erfindung eine Konservierungsvorrichtung, die zur Konservierung von biologischem Material in der Tiefsee eingerichtet ist. Anwendungen der Erfindung sind bei der Bergung und Kultivierung biologischen Materials aus der Tiefsee gegeben.

Zur Charakterisierung biologischen Materials sind verschiedene Verfahren bekannt. Während eine Genomanalyse an totem biologischem Material durchgeführt werden kann, erfordern biochemische Analysen auf molekularer, zellulärer oder physiologischer Ebene das Vorhandensein vitaler Zellen im lebenden Organismus oder in einer in-vitro-Kultur. Insbesondere die in-vitro-Kultur erleichtert die Durchführung von Laborverfahren und die Anwendung von Geräten zur Charakterisierung des biologischen Materials sowie die biotechnologische oder pharmakologische Anwendung des biologischen Materials. Während für die in-vitro-Kultivierung von Zellen der meisten an der Erdoberfläche unter Normaldruck lebenden Organismen Standardverfahren bekannt sind, bestehen erhebliche Beschränkungen bei der Untersuchung von biologischem Material, dessen natürlicher Lebensraum die Tiefsee (Tiefe unterhalb von 2000 m, z. B. unterhalb von 2300 m oder 4000 m, Abyssal, insbesondere unterhalb von 5000 m bis 11000 m, Hadal) ist.

Für Tiefsee-Organismen der Makrofauna (englisch: mega fauna) ist die Isolation und Kultivierung von biologischen Zellen bisher nur bis zu einer Tiefe von rd. 1200 m gelungen (siehe S. Koyama in "Kryotechnology", Band 55, 2007, S. 125-133). Diese Verfahren beschränken sich jedoch auf Organismen, die einen Druckabfall vom hydrostatischen Druck ihres Lebensraums bis zu Normaldruck (Atmosphärendruck) tolerieren, d.h. nicht obligat barophil sind, wie zum Beispiel der Tiefseeaal. Die von S. Koyama beschriebenen Verfahren sind jedoch für die Mehrzahl der Tiefseeorganismen nicht anwendbar, da diese in erheblich größerer Tiefe, insbesondere unterhalb von 3000 m leben und typischerweise nicht barophil sind. Biologische Organismen aus der Tiefsee sind daher bisher nicht in Laborzellkulturen vertreten oder für Untersuchungen an der Erdoberfläche zugänglich. Es sind auch Versuche bekannt, lebende Organismen aus großer Tiefe zu bergen und in Druckaquarien oder durch eine Adaptierung an Normaldruck im Labor und an der Erdoberfläche lebend zu halten. Dies gelang jedoch lediglich bis zu einer Tiefe von 2300 m (siehe B. Shillito et al. in "Deep-See Research I" Band 55, 2008, S. 881-889).

In der Praxis werden die Gründe für die bisher erfolglosen Versuche der Bergung lebenden Zellmaterials und der langzeitstabilen Etablierung von vermehrungsfähigen in-vitro-Zellkulturen darin gesehen, dass mit wachsender Tiefe die Anpassung der Organismen an hohe Drücke und eine hohe Druck-Konstanz im natürlichen Lebensraum zunimmt, in der Tiefsee sich eine Anpassung an eine konstant niedriger oder in der Nähe von heißen Quellen hohe Temperatur und eine geringe Toleranz gegenüber Temperaturänderungen entwickelt hat, und dass in großen Tiefen, insbesondere tiefer als 5000 m die Organismen generell barophil sind. Des Weiteren ist davon auszugehen, dass die an den Zellbiologischen Prozessen beteiligten Makromoleküle für hohe Drücke (bis zu 110 MPa in 11.000 m Tiefe) optimiert sind und ihre Funktion bei niedrigeren Drücken vermindern oder komplett verlieren.

Fanggeräte für die Aufnahme biologischer Organismen in der Tiefsee und deren Überführung an die Erdoberfläche unter Beibehaltung der Vitalität der Zellen sind bisher nicht verfügbar. Des Weiteren sind die technischen Beschränkungen beim Umgang mit lebenden Organismen, wie zum Beispiel bei der Tierhaltung, der Zellkultur oder dem Isolationsverfahren, unter hohen Drücken bisher ungelöst. Ein weiteres Problem besteht dabei in dem erheblichen Zeitdruck, der beim Transport von Organismen aus der Tiefsee zur Erdoberfläche besteht. Aufgrund dieser Beschränkungen sind bisher nur wenig Informationen verfügbar, welche biologischen Zellen aus welchen Gebweben kultiviert, isoliert und/oder vermehrt werden können.

Die Aufgabe der Erfindung ist es, ein verbessertes Verfahren zur Konservierung biologischen Materials aus der Tiefsee bereitzustellen, mit dem Nachteile und Beschränkungen von herkömmlichen Techniken überwunden werden und das insbesondere ermöglicht, mindestens einen biologischen Organismus aus der Tiefsee unter Erhaltung der Vitalität seiner Zellen zu bergen und die Zellen in eine stabile, vermehrungsfähige in-vitro-Kultur zu überführen. Des Weiteren ist es eine Aufgabe der Erfindung, eine verbesserte Konservierungsvorrichtung bereitzustellen, mit der Nachteile und Beschränkungen von herkömmlichen Techniken überwunden werden und die einen erweiterten Anwendungsbereich bei der Sammlung biologischer Organismen in der Tiefsee aufweist.

Diese Aufgaben werden durch ein Konservierungsverfahren und eine Konservierungsvorrichtung mit den Merkmalen der unabhängigen Ansprüche gelöst. Vorteilhafte Ausführungsformen und Anwendungen der Erfindung ergeben sich aus den abhängigen Ansprüchen.

Gemäß einem ersten Gesichtspunkt der Erfindung wird die genannte Aufgabe durch ein Konservierungsverfahren gelöst, bei dem mindestens ein biologischer Organismus in der Tiefsee eingefroren und im gefrorenen Zustand in eine Umgebung mit Normaldruck überführt wird. Das erfindungsgemäße Verfahren umfasst einen ersten Schritt, bei dem der mindestens eine biologische Organismus mit einer Fangeinrichtung aufgenommen wird. Der biologische Organismus wird mit der Fangeinrichtung in seiner natürlichen Umgebung, d.h. im Seewasser, unmittelbar angrenzend an eine Kühleinrichtung lokalisiert. Das erfindungsgemäße Verfahren umfasst in einem zweiten Schritt die Kühlung des biologischen Organismus mit der Kühleinrichtung, bis der biologische Organismus eine Temperatur unterhalb seines Gefrierpunktes aufweist. Der biologische Organismus ist im gefrorenen Zustand ein Festkörper, dessen Gestalt (Form, Größe) vorteilhafterweise unabhängig vom Außendruck ist. Damit kann der biologische Organismus im gefrorenen Zustand in einem dritten Schritt in eine Umgebung mit atmosphärischem Druck, d.h. an die Oberfläche des Ozeans überführt werden. Im gefrorenen Zustand kann eine Probe insbesondere gelagert werden, so dass der bei herkömmlichen Verfahren auftretende Zeitdruck bis zur Zellisolation entfällt.

Gemäß einem zweiten Gesichtspunkt der Erfindung wird die genannte Aufgabe durch eine Konservierungsvorrichtung gelöst, die zur Konservierung von mindestens einem biologischen Organismus in der Tiefsee eingerichtet ist und eine Fangeinrichtung sowie eine Kühleinrichtung umfasst. Die Fangeinrichtung der erfindungsgemäßen Konservierungsvorrichtung ist konfiguriert, den biologischen Organismus in der Tiefsee aufzunehmen, d.h. in einem Kühlbereich der Kühleinrichtung zu lokalisieren. Die Kühleinrichtung ist für eine Abkühlung des biologischen Organismus von einer Temperatur in seinem natürlichen Lebensraum zu einer Temperatur unterhalb seines Gefrierpunkts ausgelegt. Die Kühleinrichtung zeichnet sich durch eine aktive Kühlung des biologischen Organismus mit einem Kühlmedium aus. Vorteilhafterweise bildet die erfindungsgemäße Konservierungsvorrichtung ein autarkes Gerät, das unterseeisch beweglich und für einen Transport aus der Tiefsee an die Oberfläche des Ozeans eingerichtet ist. Mit der Konservierungsvorrichtung kann der gefrorene biologische Organismus im Festzustand druckfrei in eine Umgebung unter Normaldruck überführt werden, um dort weiteren Schritten, insbesondere zur Konservierung, Untersuchung und/oder Kultivierung unterzogen zu werden.

Der "biologische Organismus" umfasst allgemein jedes vitale Gebilde mit mindestens einer biologischen Zelle, insbesondere mikrobielle oder tierische Zellen niederer oder höherer Organismen. Vorteilhafterweise können Individuen aller in der Tiefsee auftretenden Stämme, einschließlich Fische, Krebse oder Einzeller, wie Foraminiferen, mit dem erfindungsgemäßen Verfahren gesammelt, eingefroren und aus der Tiefsee geborgen werden. Die Organismen können in der Tiefsee bodengebunden oder schwebend leben.

Die erfindungsgemäß verwendete Fangeinrichtung kann allgemein eine Struktur und Form haben, die zur Lokalisierung des biologischen Organismus im Kühlbereich der Kühleinrichtung geeignet ist. Gemäß einer bevorzugten Ausführungsform der Erfindung stellt die Fangeinrichtung einen geschlossenen Raum zur Aufnahme des mindestens einen biologischen Organismus bereit. Die Fangeinrichtung ist vorzugsweise mit mindestens einer thermisch isolierten Kammer ausgestattet. Vorzugsweise wird der gesamte biologische Organismus gemeinsam mit dem umgebenden Seewasser in der Kammer eingefroren. Von Vorteil ist, dass dies eine Konservierung in einem Zustand ohne eine mechanische Beschädigung des biologischen Organismus ermöglicht. Alternativ kann eine Konservierung in der Kammer in einem Zustand vorgesehen sein, in dem der Organismus in Teile, z. B. Gewebestücke zerlegt ist.

Vorteilhafterweise bestehen an die mechanische Stabilität der Kammer keine besonderen Anforderungen. In der Tiefsee ist die Kammer mit ausgeglichenem Innen- und Außendruck mit Seewasser gefüllt. Bei der Überführung in geringere Tiefen oder an die Oberfläche des Ozeans hingegen ist der Innenraum der Kammer vollständig mit einem Festkörper, bestehend aus dem Seewasser und mindestens einem biologischen Organismus, gefüllt, so dass auch bei verringertem Außendruck kein Innendruck gebildet wird, welcher die Stabilität der Kammer gefährden könnte. Gemäß einem bevorzugten Merkmal der Erfindung ist daher die Kammer der Fangeinrichtung ohne oder mit verminderter Druckfestigkeit gegenüber hydrostatischem Druck, der in der Tiefsee herrscht, aufgebaut.

Gemäß weiteren vorteilhaften Ausführungsformen der Erfindung umfasst die Aufnahme des mindestens einen biologischen Organismus an der Fangeinrichtung ein Anlocken, ein aktives Einspülen (z. B. Einsaugen) oder eine Kombination aus einem Anlocken und einem Einspülen. Hierzu ist die Fangeinrichtung vorzugsweise mit einer Sammeleinrichtung ausgestattet, die mindestens eines von einer Lockeinrichtung und einer Spüleinrichtung umfasst. Das Anlocken des biologischen Organismus erfolgt vorzugsweise durch Erzeugung eines Lichtreizes und/oder eines chemischen Reizes. Der Lichtreiz kann mit einer in der Kammer der Fangeinrichtung vorgesehenen Lichtquelle, wie zum Beispiel eine aktive Lichtquelle oder einen selbst-leuchtenden Bereich in der Kammer erzeugt werden. Zur Bildung des chemischen Reizes kann die Fangeinrichtung mit einer Substanzquelle ausgestattet sein, welche das Vorhandensein von Nährstoffen oder anderen Reizen simuliert.

Wenn gemäß einer weiteren Ausführungsform der Erfindung die Konservierungseinrichtung mit einer Sensoreinrichtung ausgestattet ist, mit der die Aufnahme des mindestens einen biologischen Organismus an der Fangeinrichtung erfassbar ist, kann die Steuerung der Konservierungsvorrichtung, insbesondere ein Einschalten der Kühlung vereinfacht werden. Die Sensoreinrichtung umfasst zum Beispiel einen Lichtsensor oder eine Kamera. Mit dem Lichtsensor kann das Vorhandensein des biologischen Organismus vorteilhafterweise durch eine einfache Streulichtmessung in der Kammer detektiert werden. Die Kamera ermöglicht eine Bildaufnahme vom Innenraum der Kammer. Vorteilhafterweise können damit neben der Detektion des biologischen Organismus zusätzlich Überwachungs- und Steuerungsfunktionen der Konservierungsvorrichtung realisiert werden. Alternativ oder zusätzlich kann eine elektrische Detektion des biologischen Organismus, zum Beispiel durch eine Impedanzmessung in der Kammer vorgesehen sein.

Vorteilhafterweise bestehen verschiedene Möglichkeiten, die Kühlung und das Einfrieren des mindestens einen biologischen Organismus in der Tiefsee zu realisieren. Gemäß einer ersten Variante kann ein fluides Kühlmedium in eine Kühlleitung eingeleitet werden, die in einer Innenwand der Fangeinrichtung, insbesondere einer Innenwand der Kammer angeordnet ist. Das Seewasser und der mindestens eine biologische Organismus in der Fangeinrichtung werden vorteilhafterweise in unmittelbaren thermischen Kontakt mit der Kühlleitung gebracht. Somit kann eine hohe Kühleffektivität erzielt werden. Vorzugsweise ist die Kühlleitung vor der Einleitung des Kühlmittels mit einem fluiden Füllmedium gefüllt. Das Füllmedium bewirkt einen Druckausgleich vor Beginn der Kühlung. Bei Einleitung des Kühlmediums kann das Füllmedium aus der Kühlleitung verdrängt und zum Beispiel in die Umgebung der Konservierungsvorrichtung abgegeben werden. Gemäß einer zweiten Variante kann eine Kühlung einer Innenwand der Fangeinrichtung, insbesondere einer Innenwand der Kammer bereitgestellt werden, indem zwischen dem Kühlmedium in einem Kühlmittelbehälter und der Innenwand mindestens eine Wärmebrücke gebildet wird. Die Wärmebrücke ist ein Bauteil mit einer im Vergleich zur thermisch isolierten Außenwand der Fangeinrichtung erhöhten Wärmeleitfähigkeit. Die Kühlung über mindestens eine Wärmebrücke ermöglicht vorteilhafterweise einen vereinfachten Aufbau der erfindungsgemäßen Konservierungsvorrichtung.

Das erfindungsgemäß verwendete Kühlmedium ist allgemein eine feste oder fließfähige (fluide, insbesondere flüssige oder gasförmige) Substanz, die in Abhängigkeit von der Temperatur, dem Volumen und der Wärmekapazität so gewählt ist, dass bei einem Wärmetausch mit dem Innenraum der Fangeinrichtung dieser vollständig gefroren werden kann. Das Kühlmedium umfasst zum Beispiel festes Kohlendioxid oder flüssigen Stickstoff oder Dampf des flüssigen Stickstoffs. Gemäß einer weiteren Variante kann das Kühlmedium ein, z. B. auf - 196 °C, unterkühlter Festkörper sein, wie z. B. ein Metall- oder Keramikblock. Der Festkörper kann Hohlräume aufweisen, z. B. porös sein, und fluides Kühlmittel enthalten. Ein festes Kühlmedium kann ferner Eis von Wasser, insbesondere Salzwasser oder Süßwasser (Frischwasser) umfassen. In diesem Fall wird durch das Kühlmedium vorteilhafterweise ein Auftriebskörper gebildet, der zur Bewegung der Konservierungsvorrichtung beitragen kann.

Vorzugsweise ist das Kühlmittel in einem thermisch isolierten Kühlmittelbehälter angeordnet. Im Kühlmittelbehälter kann das Kühlmittel über einen ausreichend langen Zeitraum, der zum Beispiel mindestens 6 Stunden, vorzugsweise mindestens 10 Stunden, z. B. 24 Stunden oder mehr, sogar 2 oder mehr Tage, z. B. 10 Tage oder mehr umfassen kann, stabil gehalten werden, ohne dass eine Kühlung der Fangeinrichtung erfolgt. Gemäß einer besonders bevorzugten Ausführungsform der Erfindung ist vorgesehen, dass die Kühlung erst zu einem vorbestimmten Zeitpunkt betätigt wird, um den Innenraum der Fangeinrichtung einzufrieren. Der Kühlbeginn wird so gewählt, dass das Einfrieren erst erfolgt, wenn sich ein biologischer Organismus, gegebenenfalls ein Organismus von einer gewünschten biologischen Art, in der Fangeinrichtung befindet.

Zum Einschalten der Kühlung ist vorzugsweise ein Öffnen mindestens eines Ventil in mindestens einer Zufuhrleitung von dem Kühlmittelbehälter zu der Kühlleitung vorgesehen. Bei der Kühlung über die mindestens eine Wärmebrücke ist vorzugsweise vorgesehen, dass die Wärmebrücke zum Beispiel durch ein mechanisches Umschalten aktiviert wird, um die Wärmekopplung zwischen dem Kühlmittel im Kühlmittelbehälter und der Innenwand der Fangeinrichtung zu bilden. Besonders bevorzugt erfolgt das Einschalten der Kühlung in Abhängigkeit von einem Signal der Sensoreinrichtung, mit dem die Aufnahme des biologischen Organismus an der Fangeinrichtung angezeigt wird.

Vorteilhafterweise kann die erfindungsgemäße Konservierungsvorrichtung für ein Aufsteigen von der Tiefsee an die Oberfläche des Ozeans ohne einen aktiven mechanischen Antrieb ausgelegt sein. Das Aufsteigen kann ausschließlich durch einen Auftrieb bewirkt werden. Hierzu ist die Konservierungsvorrichtung mit einer Auftriebseinrichtung ausgestattet, die vorzugsweise ein- und abgeschaltet werden kann, um die Position (Tiefe) und/oder das Aufsteigen der Konservierungsvorrichtung zu steuern. Wenn das Kühlmittel einen unterkühlten Eisblock umfasst, kann dieser zum Auftrieb beitragen. In diesem Fall wird zum Auftauchen eine an der Konservierungsvorrichtung optional vorgesehene Ballastmasse von der Konservierungsvorrichtung getrennt.

Besonders bevorzugt ist eine Variante der Erfindung, bei der die Auftriebseinrichtung durch eine Überführung von Kühlmedium in einen gasförmigen Zustand betätigt wird. Die Konservierungsvorrichtung kann mit einem Auftriebsgefäß ausgestattet sein, in das das gasförmige Kühlmedium eingeleitet wird. Vorzugsweise weist das Auftriebsgefäß eine nachgiebige Gefäßwand auf, so dass es bei Einleitung des gasförmigen Kühlmediums auffaltbar ist. Thermodynamische Simulationen haben ergeben, dass ein Auffalten eines Auftriebsgefäßes selbst unter dem hohen hydrostatischen Druck in der Tiefsee möglich ist. In Abhängigkeit von den konkreten Druckbedingungen, insbesondere der Tiefe, in der das Einfrieren des biologischen Organismus erfolgt, kann vorgesehen sein, dass das Auftriebsgefäß bereits unmittelbar beim Einfrieren oder ggf. erst in einer geringeren Tiefe, d. h. bei geringerem Druck, z. B. ab 1000 m aufwärts verwendet wird.

Das Einschalten des Auftriebs mit der Einleitung von gasförmigem Kühlmedium in das Auftriebsgefäß hat den besonderen Vorteil, dass das erfindungsgemäße Verfahren vollständig automatisierbar ist. Die Konservierungsvorrichtung mit dem gefüllten Kühlmittelbehälter kann in die Tiefsee abgesenkt werden und dort verbleiben, bis, gegebenenfalls unter der Wirkung des Anlockens oder aktiven Einspülens, der mindestens eine biologische Organismus gefangen ist. Sobald mit der Sensoreinrichtung die Aufnahme des biologischen Organismus detektiert ist, wird die Kühlung angeschaltet, so dass der biologische Organismus eingefroren wird. Gleichzeitig wird das mit dem verbrauchten Kühlmittel gefüllte Auftriebsgefäß aufgefaltet, bis der Auftrieb ausreichend groß ist, dass die Konservierungsvorrichtung aufsteigt. Im Ergebnis taucht die Konservierungsvorrichtung automatisch mit dem gefrorenen Inhalt der Fangeinrichtung auf.

Vorteilhafterweise kann das Einfrieren in der Tiefsee so erfolgen, wie es von der herkömmlichen Kryokonservierung an sich bekannt ist. Beispielsweise kann dem Innenraum der Fangeinrichtung, insbesondere nach der Aufnahme des mindestens einen biologischen Organismus, ein Kryoprotektivum zugesetzt werden, welches ein schonendes Einfrieren des mindestens einen biologischen Organismus gewährleistet und/oder die Kristallbildung beim Einfrieren beeinflusst. Alternativ oder zusätzlich kann eine mechanische Präparation des mindestens einen biologischen Organismus vorgesehen sein, die vor dem Einfrieren in der Fangeinrichtung eine Zerlegung des mindestens einen biologischen Organismus in Gewebestücke umfasst.

Vorteilhafterweise bestehen verschiedene Möglichkeiten zur weiteren Bearbeitung oder Behandlung der gefrorenen Probe nach deren Überführung in die Umgebung mit Normaldruck. Vorzugsweise ist vorgesehen, dass die Kühlung in der Umgebung mit Normaldruck (atmosphärische Umgebung) aufrechterhalten wird. Die Probe wird nach dem Auftauchen im gefrorenen Zustand belassen. Vorteilhafterweise ist die Probe in diesem Zustand mechanisch stabil, so dass die biologischen Zellen oder zumindest deren Bestandteile in einem potenziell vitalen oder zellbiologisch funktionierenden Zustand erhalten werden.

Anschließend kann der biologische Organismus im gefrorenen Zustand unter Normaldruck zerlegt werden. Es kann eine mechanische Zerlegung vorgesehen sein, um gefrorenes Seewasser vom biologischen Organismus zu trennen und/oder den biologischen Organismus in Teile, zum Beispiel Gewebestücke, zu zerlegen. Letzteres ist von Vorteil, wenn die nachfolgenden Schritte auf die Kultivierung von bestimmten Zelltypen des biologischen Organismus beschränkt sind.

Gemäß einer weiteren Variante des erfindungsgemäßen Verfahrens kann ein Auftauen des biologischen Organismus oder von Teilen von diesem vorgesehen sein. Je nach der gewünschten weiteren Verwendung der biologischen Zellen kann das Auftauen unter Normaldruck oder in einer Druckkammer unter erhöhtem Druck erfolgen. Anschließend ist vorzugsweise eine Kultivierung der bei dem Auftauen gewonnenen Zellen vorgesehen, wobei je nach deren Eignung die Kultivierung unter Normaldruck oder unter erhöhtem Druck mit an sich bekannten Kultivierungsverfahren erfolgen kann.

Die Verwendung der Kryokonservierung zur Bergung von biologischen Organismen in der Tiefsee stellt einen unabhängigen Gegenstand der Erfindung dar.

Weitere Einzelheiten und Vorteile der Erfindung werden im Folgenden unter Bezug auf die beigefügten Zeichnungen beschrieben. Es zeigen:
- Figuren 1 bis 8:: schematische Schnittansichten verschiedener Ausführungsformen der erfindungsgemäßen Konservierungsvorrichtung;
- Figuren 9A bis 9G:: eine schematische Illustration einer bevorzugten Ausführungsform des erfindungsgemäßen Konservierungsverfahrens;
- Figur 10:: eine schematische Illustration der optional unter Normaldruck vorgesehenen Kryokonservierung; und
- Figuren 11A bis 11D:: eine schematische Illustration von erfindungsgemäß vorgesehenen Kultivierungsschritten.

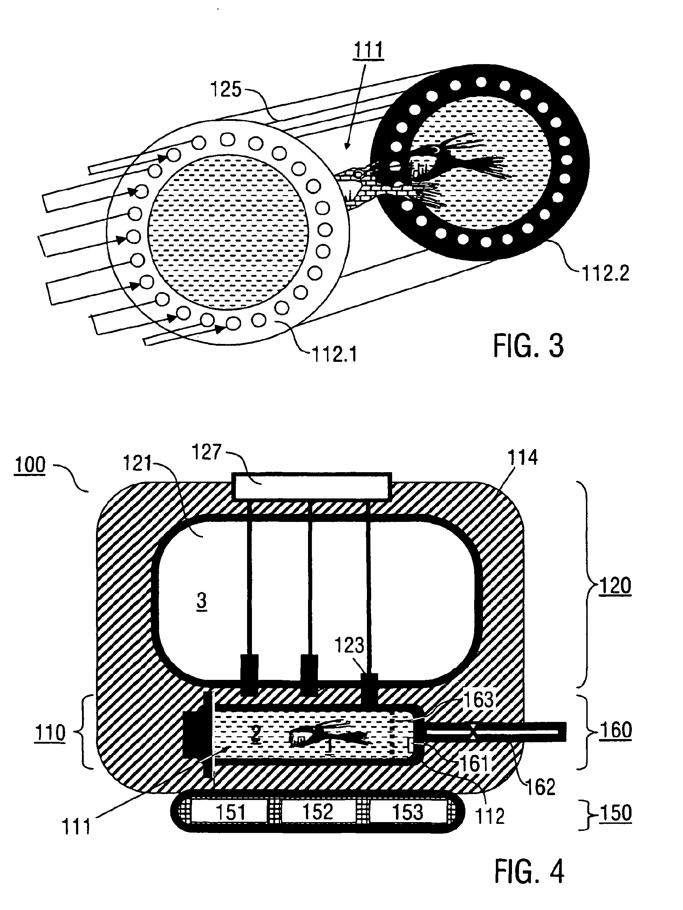

Ausführungsformen der erfindungsgemäßen Konservierungsvorrichtung sind in den Zeichnungen schematisch illustriert, um die Komponenten der Konservierungsvorrichtung zu zeigen. Es wird betont, dass es sich dabei nicht um maßstäbliche Darstellungen handelt. Die Größenverhältnisse, insbesondere der Kühleinrichtung relativ zur Fangeinrichtung, können erheblich von den Illustrationen abweichen (siehe z. B. Figur 4).

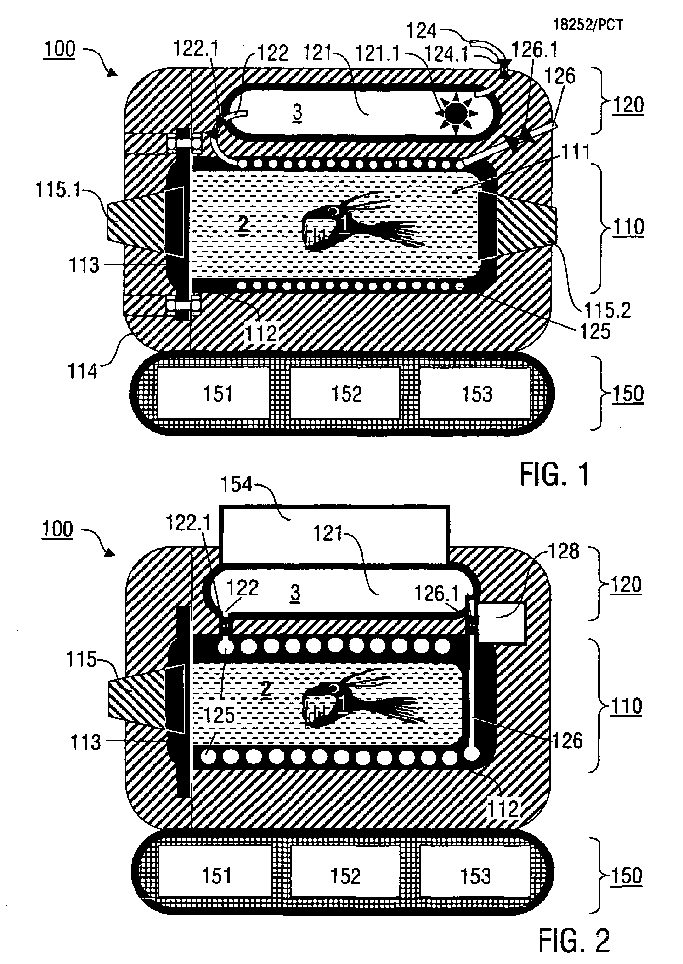

Figur 1 illustriert eine erste Ausführungsform der erfindungsgemäßen Konservierungsvorrichtung 100 in schematischer Schnittansicht. Die Konservierungsvorrichtung 100 umfasst die Fangeinrichtung 110, die Kühleinrichtung 120 und die Steuereinrichtung 150. Optional können weitere Komponenten, wie zum Beispiel eine Sensoreinrichtung, eine Präparationseinrichtung und/oder eine Auftriebseinrichtung vorgesehen sein, die unten unter Bezug auf die Figuren 2 bis 8 beschrieben sind. Figur 1 zeigt die Konservierungsvorrichtung 100 beispielhaft in einem Zustand, in dem ein Organismus 1 mit umgebendem Seewasser 2 in der Fangeinrichtung 110 lokalisiert und eingefroren ist.

Die Fangeinrichtung 110 umfasst eine Kammer 111, die von einer Innenwand 112 und einer Vorderwand 113 gebildet wird und zum Beispiel eine Zylinderform aufweist. Alternativ kann die Konservierungsvorrichtung 100 mit mehreren Kammern ausgestattet sein, die gemeinsam oder selektiv einfrierbar sind. Der Innendurchmesser der Kammer 111 ist zum Beispiel im Bereich von 1 cm bis 100 cm gewählt, während die axiale Länge der Kammer 111 im Bereich von 5 cm bis 200 cm gewählt ist. Die Innenwand 112 und die Vorderwand 113 sind von einer thermisch isolierenden Außenwand 114 eingehüllt, die gleichzeitig eine thermische Isolation der Kühleinrichtung 120 bildet. Die Kühleinrichtung 120 wird vollständig von der thermisch isolierenden Außenwand 114 umgeben. Die Innenwand 112 und die Vorderwand 113 bestehen zum Beispiel aus Metall, insbesondere Edelstahl, oder einem Kunststoff, insbesondere faserverstärkter Verbundwerkstoff, wie z. B. kohle- oder glasfaserverstärkter Verbundwerkstoff. Wenn die Kammer 111 nicht oder vermindert druckfest ist, können die Innenwand 112 und die Vorderwand 113 mit einer geringen Dicke, beispielsweise im Bereich von 1 cm bis 20 cm ausgeführt sein. Die Dicke der Außenwand 114 hingegen ist zur Erzielung einer ausreichenden thermischen Isolation gewählt. Wenn die Außenwand zum Beispiel aus Glas- oder Keramikkugeln in einem Schaumstoffverbundmaterial gebildet ist, beträgt die Dicke vorzugsweise 10 cm bis 50 cm.

Die Fangeinrichtung 110 umfasst des Weiteren zwei Deckel 115.1, 115.2, die an den axialen Enden der Kammer 111 angeordnet sind. Die Deckel 115.1, 115.2 sind konische Bauteile, welche die Kammer 111 gegenüber der Umgebung verschließen und vorzugsweise zum Inneren der Kammer 111 hin geöffnet werden können. Das Öffnen der Deckel 115.1, 115.2 nach innen hat den Vorteil, dass mit sinkendem Außendruck beim Auftauchen der Konservierungsvorrichtung 100 durch einen gegebenenfalls vorhandenen Rest-Innendruck in der Kammer 111 die Deckel 115.1, 115.2 fest an die Innenwand 112 gepresst werden. Die Deckel 115.1, 115.2 sind, z. B. mit Teilen der Außenwand 114 thermisch isoliert. Die Kammer 111 kann zusätzlich geöffnet werden, indem die Vorderwand 113 von der Innenwand 112 getrennt wird. Hierzu ist eine Schraubverbindung zwischen der Vorderwand 113 und der Innenwand 112 (Flanschverbindung) vorgesehen. Alternativ kann ein einziger Deckel vorgesehen sein (siehe Figur 4).

Die Kühleinrichtung 120 umfasst einen Kühlmittelbehälter 121 zur Aufnahme des Kühlmittels 3, eine Zufuhrleitung 122 mit einem Zufuhrventil 122.1 und eine Kühlleitung (Hohlleitung) 125, welche in der Innenwand 112 verläuft. Des Weiteren ist bei der in Figur 1 gezeigten Ausführungsform der Erfindung eine Auslassleitung 126 mit einem Auslassventil 126.1 vorgesehen, durch welche Kühlmittel an die Umgebung abgegeben werden kann. Die Befüllung des Kühlmittelbehälters 121 erfolgt vor der Verwendung der Konservierungsvorrichtung 100, d.h. noch unter Normaldruck unter Verwendung einer Füllleitung 124 mit einem Füllventil 124.1, die mit einem Vorratsbehälter (nicht dargestellt) verbunden werden kann.

Im Kühlmittelbehälter 121 ist eine schematisch dargestellte Förder- oder Pumpeinrichtung 121.1 vorgesehen, mit der das Kühlmittel 3 im Kühlmittelbehälter 121 mit einem vorbestimmten Betriebsdruck beaufschlagt werden kann. Bei Betätigung der Pumpeinrichtung 121.1 wird mit den geöffneten Zufuhr- und Auslassventilen 122.1 das Kühlmittel durch die Kühlleitung 125 gepumpt, um die Innenwand 112 der Kammer 111 zu kühlen. Das Kühlmittel 3 umfasst zum Beispiel flüssigen Stickstoff. Das Volumen des Kühlmittelbehälters 121 ist zum Beispiel im Bereich von 1000 cm³ bis 1 m³ gewählt. Mit dem Kühlmittel 3 kann die Temperatur der Innenwand 112 zum Beispiel auf den Bereich von - 60 °C bis - 196 °C eingestellt werden. Die Erfinder haben festgestellt, dass bei dem hohen hydrostatischen Druck in der Tiefsee in diesem Temperaturbereich die typischen, für die Kryokonservierung verwendeten Kühlmittel, wie insbesondere flüssiger Stickstoff, flüssig sind.

Die schematisch dargestellte Steuereinrichtung 150 umfasst eine Energieversorgung 151, ein Steuermodul 152 und eine Kopplungseinrichtung 153. Die Energieversorgung 151 enthält zum Beispiel elektrische Energiespeicher wie Akkumulatoren oder Batterien. Die Energieversorgung 151 ist mit den Komponenten 152, 153, den elektrisch bestätigbaren Ventilen 122.1, 126.1 und mit der Pumpeinrichtung 121.1 verbunden. Das Steuermodul 152 enthält einen Schaltkreis, mit dem verschiedene Betriebszustände der Konservierungseinrichtung 100, wie zum Beispiel das Einschalten der Kühlung, das Öffnen oder Schließen der Deckel 115.1, 115.2 oder die Betätigung einer Lockeinrichtung (siehe unten), steuerbar. Die Kopplungseinrichtung 153 ist allgemein als mechanische, hydraulische, elektrische und/oder datentechnische Schnittstelle zur Verbindung der Konservierungsvorrichtung 100 mit externen Geräten (nicht dargestellt) vorgesehen. Die Kopplungseinrichtung 153 repräsentiert auch Komponenten (mit weiteren Einzelheiten nicht dargestellt), wie zum Beispiel Vorsprünge, Hülsen, Haken und Profile, mit denen ein Verbindungskabel zur mechanischen und/oder elektrischen Verbindung der Konservierungsvorrichtung 100 z. B. mit einem Schiff verbunden werden kann. Es kann auch eine optische Verbindung der Konservierungsvorrichtung 100 z. B. mit einem Schiff über eine Lichtleitereinrichtung vorgesehen sein. Die Lichtleitereinrichtung kann zur Signalübertragung und/oder zur Lichtleitung für Beleuchtungs- oder Abbildungszwecke vorgesehen sein.

Zur Durchführung des erfindungsgemäßen Verfahrens wird die Konservierungsvorrichtung 100 bis in die gewünschte Fangtiefe, die zum Beispiel bis zu 11000 m betragen kann, im Ozean abgesenkt. In diesem Zustand ist mindestens einer Deckel 115.1, 115.2 geöffnet. Die Ventile 122.1, 126.1 und 124.1 sind geschlossen. Wenn die Aufnahme eines biologischen Organismus 1, wie zum Beispiel eines schematisch dargestellten Tiefsee-Fisches, in der Fangeinrichtung 110 detektiert worden ist, werden die Deckel 115.1, 115.2 geschlossen. Anschließend wird zunächst das Zufuhrventil 122.1 geöffnet. Durch den Gasdruck, der im Kühlmittelbehälter 121 über dem Kühlmittel ausgebildet ist, wird das Kühlmittel durch die Zufuhrleitung 122 in die Kühlleitung 125 gepresst. Durch das Öffnen des Auslassventils 126.1 kann ein zuvor in der Kühlleitung 125 vorhandenes Füllmittel, wie zum Beispiel Benzin, Alkohol oder niederviskosem Öl, und anschließend das durchströmende Kühlmittel in das umgebende Seewasser gelangen. Dabei wird die Innenwand 112 und mit dieser das in der Kammer 111 befindliche Seewasser 2 mit dem Organismus 1 bis zum Gefrieren abgekühlt. Das in das äußere Seewasser abströmende Kühlmittel ist durch den Wärmetausch entlang der Kühlleitung 125 erwärmt, wobei es im flüssigen oder vorzugsweise gasförmigen Zustand in das äußere Seewasser austritt. Ein Verschluss der Mündung der Auslassleitung 126 durch gefrierendes Wasser wird aufgrund der natürlichen Bewegung und die hohe Wärmekapazität des umgebenden Seewassers vermieden.

Im gefrorenen Zustand ist das gesamte System, abgesehen von dem Volumen des Kühlmittelbehälters 121, der Zufuhrleitung 122 und der Kühlleitung 125 ein Festkörper und daher drucktolerant bis zu einem Außendruck von mehr als 100 MPa. Die Druckstabilität wird durch entsprechend dicke Wände lediglich für die genannten Komponenten und die Steuereinrichtung 150 realisiert. In der Steuereinrichtung 150 kann die Druckstabilität durch Ausgießen eventuell vorhandener Hohlräume, zum Beispiel mit einem Kunststoff verbessert werden. Die Druckstabilität stellt neben der Kryokonservierung in der Tiefsee einen wesentlichen Vorteil der erfindungsgemäßen Konservierungsvorrichtung dar, da durch die Stabilität die Struktur und Betätigung der Konservierungsvorrichtung 100 vereinfacht werden. Zusätzlich kann die Konservierungsvorrichtung 100 mit nicht dargestellten Auftriebs- und/oder Ballastkörpern ausgestattet sein, die einen beschleunigten Transfer in die Tiefe oder an die Oberfläche ermöglichen.

Nach dem Gefrieren des Inhalts der Kammer 111 kann die Konservierungsvorrichtung 100 in einen Bereich geringeren Druckes, zum Beispiel in eine geringere Tiefe oder bis an die Oberfläche des Ozeans transportiert werden. Der Transport erfolgt z. B. unter Verwendung eines Trägerseils und/oder einer Auftriebseinrichtung (siehe unten). Da die Kühlung mindestens für die Dauer des Transports aufrechterhalten werden soll, wird das Volumen des Kühlmittelbehälters 121 für eine ausreichende Versorgung der Kühlleitung 125 mit dem Kühlmittel gewählt. Typischerweise ist das Volumen des Kühlmittelbehälters 121 20- bis 100-fach größer als das Volumen der Kammer 111. Diese Größenverhältnisse sind in den Figuren nicht maßstäblich dargestellt.

Figur 2 zeigt eine abgewandelte Variante der Konservierungsvorrichtung 100 mit der Fangeinrichtung 110, der Kühleinrichtung 120 und der Steuereinrichtung 150. Die Konservierungsvorrichtung 100 ist ähnlich wie die Ausführungsform gemäß Figur 1 aufgebaut. Im Unterschied zu der oben beschriebenen Ausführungsform ist jedoch ein Kühlmittel-Kreislauf vorgesehen, der vom Kühlmittelbehälter 121 über die Zufuhrleitung 122 mit dem Zufuhrventil 122.1 in die Kühlleitung 125 und von dieser über die Auslassleitung 126 mit dem Auslassventil 126.1 zurück in den Kühlmittelbehälter 121 und oder einen schematisch gezeigten Auffangbehälter 128 führt. Figur 2 illustriert des Weiteren, dass für die Funktion der Fangeinrichtung 110 nicht zwei Deckel erforderlich sind, sondern ein einziger Deckel 115 ausreichend ist. Dieser ist vorzugsweise in die Vorderwand 113 integriert. Des weiteren ist schematisch eine optional vorgesehene Signaleinrichtung 154 illustriert, mit der z. B. Licht- oder Funksignale an die Oberfläche übermittelt werden können.

Bei der Ausführungsform gemäß Figur 2 ist die Innenwand 112 der Fangeinrichtung druckstabil gebildet. Hierzu ist die Dicke der Innenwand 112 zwischen der Kühlleitung 125 und der Außenseite der Innenwand 112 mindestens 10 mm bis 30 cm. Die Druckstabilität ist jedoch kein zwingendes Merkmal. Auch in diesem Fall kann die Kühlleitung 125 vor der Kühlung mit einem Füllmittel, wie zum Beispiel Benzin, Alkohol oder niederviskosem Öl gefüllt sein, das durch das eindringende Kühlmittel, wie zum Beispiel flüssigen Stickstoff, zu Beginn der Kühlung verdrängt wird.

Die Anordnung der Kühlleitung 125 in der Innenwand 112 kann optimiert werden, wie dies an sich von herkömmlichen Wärmetauschern bekannt ist. Beispielsweise kann die Kühlleitung 125 die Kammer 111 spiralförmig umgeben (Figuren 1, 2) oder sich in Längsrichtung der Kammer 111 erstreckend, mäanderförmig angeordnet sein, wie in der Phantomdarstellung von Figur 3 schematisch illustriert ist. In diesem Fall erstreckt sich die Kühlleitung mit kreisförmigem Querschnitt in Längsrichtung der Kammer 111, wobei an dem vorderen Ende 112.1 und dem hinteren Ende 112.2 der Innenwand (nicht gezeigt) eine Umkehrung der Strömungsrichtung des Kühlmittels (siehe Pfeile zur Illustration der Kühlleitung 125) erfolgt.

Eine weitere Ausführungsform der erfindungsgemäßen Konservierungsvorrichtung 100 mit der Fangeinrichtung 110, der Kühleinrichtung 120 und der Steuereinrichtung 150 ist schematisch in Figur 4 illustriert. Bei dieser Ausführungsform erfolgt die Kühlung der Kammer 111 nicht mit einem strömenden Kühlmittel, sondern durch Wärmeleitung über mindestens eine Wärmebrücke 123. In diesem Fall umfasst die Kühleinrichtung 120 den Kühlmittelbehälter 121, der in der Außenwand 114 der Fangeinrichtung 110 thermisch isoliert angeordnet ist. Des Weiteren ist die Kühleinrichtung 120 mit einer Antriebseinrichtung 127 ausgestattet, mit der die Wärmebrücken 123 vom Kühlmittelbehälter 121 durch die Außenwand 114 vorgeschoben werden können, um in thermischen Kontakt mit der Innenwand 112 der Kammer 111 gebracht zu werden. In Figur 4 ist beispielhaft eine vorgeschobene Wärmebrücke 123 illustriert, während sich die übrigen Wärmebrücken noch im zurückgezogenen Zustand befinden.

Die Ausführungsform gemäß Figur 4 hat den Vorteil, dass die Innenwand 112 der Kammer 111 nicht druckfest sein muss, da der Innendruck stets gleich dem Außendruck ist und nach der Vereisung des Seewassers 2 mit dem Organismus 1 im Inneren der Kammer 111 ein inkompressibler Festkörper vorliegt. Lediglich der Kühlmittelbehälter 121 mit der Antriebseinrichtung 127 muss druckfest gebildet sein.

Figur 4 illustriert schematisch eine Sammeleinrichtung 160, die eine Lockeinrichtung 161 zum Anlocken des Fisches 1 in die Fangeinrichtung 110 und/oder eine Spüleinrichtung 162 zum Einspülen (Einsaugen) des Fisches 1 in die Fangeinrichtung 110 umfasst. Zum Anlocken kann die Lockeinrichtung 161 Leuchtmittel oder selbstleuchtende Farbstoffe umfassen, die auf einer Innenseite der Kammer 111 angebracht sind. Vorteilhafterweise reagieren Tiefseeorganismen häufig auf solche Lichtsignale. Alternativ können auch Leuchtdioden, Lichtleitfasern etc. vorgesehen sein, die ggf. Lichtimpulse abgeben und das Leuchtverhalten von Organismen in der Tiefsee nachbilden. Die Spüleinrichtung 162 umfasst ein Saugrohr, das an die Kammer 111 angeschlossen ist, und ggf. eine Pumpe (nicht dargestellt).

In der Kammer 111 kann des Weiteren ein Sieb oder Gitter 163 zum Festhalten und Aufkonzentrieren der eingespülten Organismen angeordnet sein. Vorteilhafterweise kann in diesem Fall die Zugabe eines Kryoprotektivums auf den Bereich am Gitter 163 beschränkt werden. Zusätzlich zu dem Gitter 163 kann ein Trennwerkzeug in der Kammer 111 angeordnet sein, mit dem eingespülte Organismen unter der Wirkung der Strömungskraft in der Kammer 111 in Gewebestücke zerlegt und dann am Gitter 63 festgehalten werden.

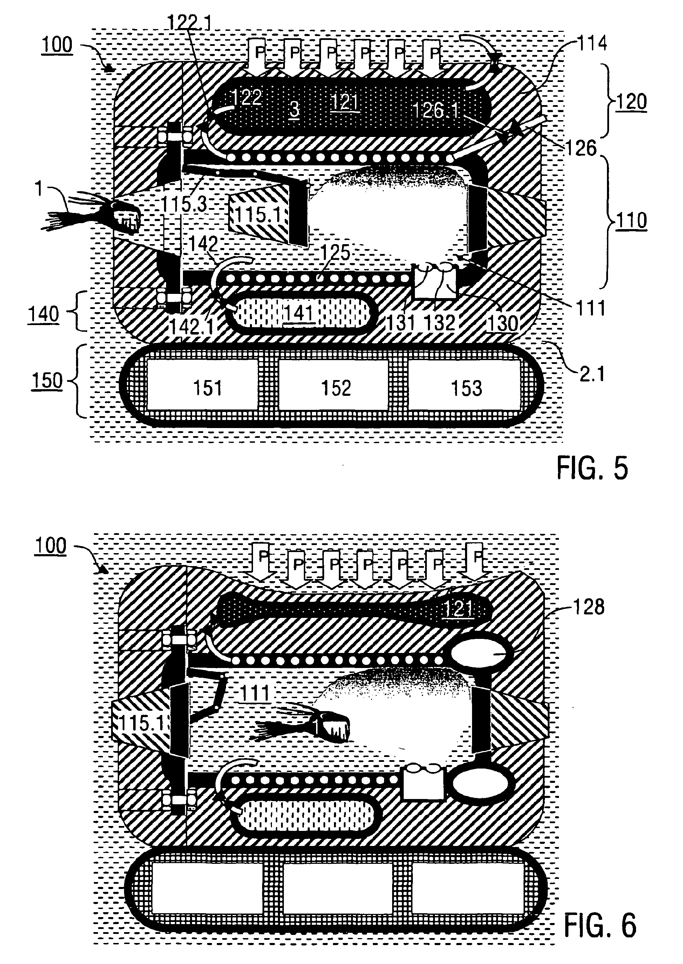

Die Figuren 5 und 6 illustrieren eine Ausführungsformen der erfindungsgemäßen Konservierungsvorrichtung 100 im Seewasser 2.1 kurz vor dem Fang eines Tiefsee-Fisches 1 (Figur 5) und nach dem Vereisen des Inhalts der Kammer 111 (Figur 6). In diesem Fall sind die Fangeinrichtung 110 und die Kühleinrichtung 120 im Wesentlichen aufgebaut, wie dies oben unter Bezug auf Figur 1 beschrieben wurde. In Figur 6 sind zusätzlich optional vorgesehene druckfeste Auffangbehälter 128 gezeigt, in die Kühlmittel strömen kann. Abweichend von der obigen Variante ist jedoch keine Pumpeinrichtung zum Transport des Kühlmittels vorgesehen. Stattdessen ist der Kühlmittelbehälter 121 mit einer verminderten Druckstabilität gebildet. Die Druckstabilität des Kühlmittelbehälters 121 ist so gewählt, dass mit geschlossenen Ventilen 122.1, 126.1 der mit dem Kühlmedium gefüllte Kühlmittelbehälter 121 dem Außendruck in der Tiefsee standhält. Wenn hingegen die Ventile 122.1, 126.1 zu Kühlbeginn geöffnet werden, um den Inhalt der Kammer 111 einzufrieren (Figur 6), verringert sich der Innendruck im Kühlmittelbehälter 121, so dass dieser unter der Wirkung des hydrostatischen Außendrucks graduell kollabiert. Dabei wird das Kühlmittel zunehmend durch die Kühlleitung 125 und die Auslassleitung 126 nach außen gepresst.

Figur 5 illustriert ferner einen schematisch gezeigten Deckelhebel 115.3, der mit dem Deckel 115.1 verbunden und für dessen Bewegung vom geöffneten Zustand (Figur 5) in den geschlossenen Zustand (Figur 6) oder umgekehrt vorgesehen ist.

Der Deckelhebel 115.3 ist mit einem elektrischen Antriebsmotor (nicht dargestellt) in einer druckfesten Kammer und/oder einer Antriebsfeder ausgestattet, die mit dem Steuermodul 152 elektrisch ansteuerbar sind. Figur 5 illustriert auch eine Sensoreinrichtung 130, die zumindest teilweise in der Kammer 111 angeordnet ist und eine Lichtquelle 131 und einen optischen Sensor, zum Beispiel eine Kamera 132 in einem druckfesten Gehäuse umfasst. Die Sensoreinrichtung 130 ist mit dem Steuermodul 152 verbunden. Bei Detektion der Aufnahme des Tiefsee-Fisches 1 in der Kammer 111 liefert die Sensoreinrichtung 130 ein Signal. In Abhängigkeit von diesem Signal wird mit dem Steuermodul 152 der Deckel 115.1 geschlossen und die Kühlung mit der Kühleinrichtung 120 eingeschaltet. Die Lichtquelle 131 kann zusätzlich zur Beleuchtung für eine Bildaufnahme mit der Kamera 132 auch als Lockeinrichtung vorgesehen sein. Der Tiefsee-Fisch 1 wird durch die Lichtquelle, die zum Beispiel wie ein selbstleuchtender Tiefsee-Organismus erscheint, angelockt.

Des Weiteren illustriert Figur 5 eine Präparationseinrichtung 140, die zur Bereitstellung vorbestimmter Konservierungsbedingungen in der Kammer 111, insbesondere zur Zufuhr eines Kryoprotektivums eingerichtet ist. Die Präparationseinrichtung 140 umfasst ein Vorratsgefäß 141, das in der Außenwand 114 angeordnet und über eine Präparationsleitung 142 mit einem Präparationsventil 142.1 mit dem Innenraum der Kammer 111 verbunden ist. Die Betätigung der Präparationseinrichtung ist nach dem Schließen des Deckels 115.1 vor oder gleichzeitig mit dem Einschalten der Kühlung vorgesehen. Durch das Öffnen des Präparationsventils 142.1 wird das Kryoprotektivum, zum Beispiel Dimethylsulfoxid durch den Druck auf das Vorratsgefäß 141 in die Kammer 111 geleitet. Alternativ oder zusätzlich kann die Zuführung von mindestens einem Kryoprotektivum mittels Diffusion durch einen semipermeablen Bereich der Innenwand 112 vorgesehen sein. Gemäß einer weiteren Abwandlung der Konservierungsvorrichtung 100 können mehrere Vorratsgefäße vorgesehen sein, die zum Beispiel verschiedene Kryoprotektiva oder andere Zusatzstoffe in die Kammer 111 einleiten. Ein Vorratsgefäß kann auch als Lockeinrichtung zur Einleitung einer Locksubstanz in die Kammer 111 verwendet werden.

Alternativ oder zusätzlich kann die Präparationseinrichtung 140 für eine mechanische Präparation des Organismus 1 eingerichtet sein. Beispielsweise kann die Präparationseinrichtung 140 Trennwerkzeuge umfassen, die zur Zerlegung des Organismus 1 in der Fangeinrichtung in einzelne Gewebestücke eingerichtet sind. Des weiteren kann die Präparationseinrichtung 140 Injektionswerkzeuge, wie z. B. Kanülen, Nadeln oder Harpunen, umfassen, die zum Eindringen und ggf. zur Injektion von Substanzen in den Organismus 1 in der Fangeinrichtung eingerichtet sind. Vorteilhafterweise kann damit vor dem Einfrieren der Organismus 1 in kleine Gewebestücke zerlegt oder durch die Injektionswerkzeuge, die schlagartig in den Organismus eingebracht werden, mit Kryoschutzmitteln oder auch Gefriermittel penetriert werden. Somit wird der Erhalt von Gewebefragmenten mit lebenden Zellen bei der Kryokonservierung verbessert. Die Trennwerkzeuge und/oder Injektionswerkzeuge können beweglich in die Innenwand der Kammer 111 integriert sein und mechanisch, z. B. mit einem druckfesten Motorantrieb oder einem Federantrieb betätigt werden.

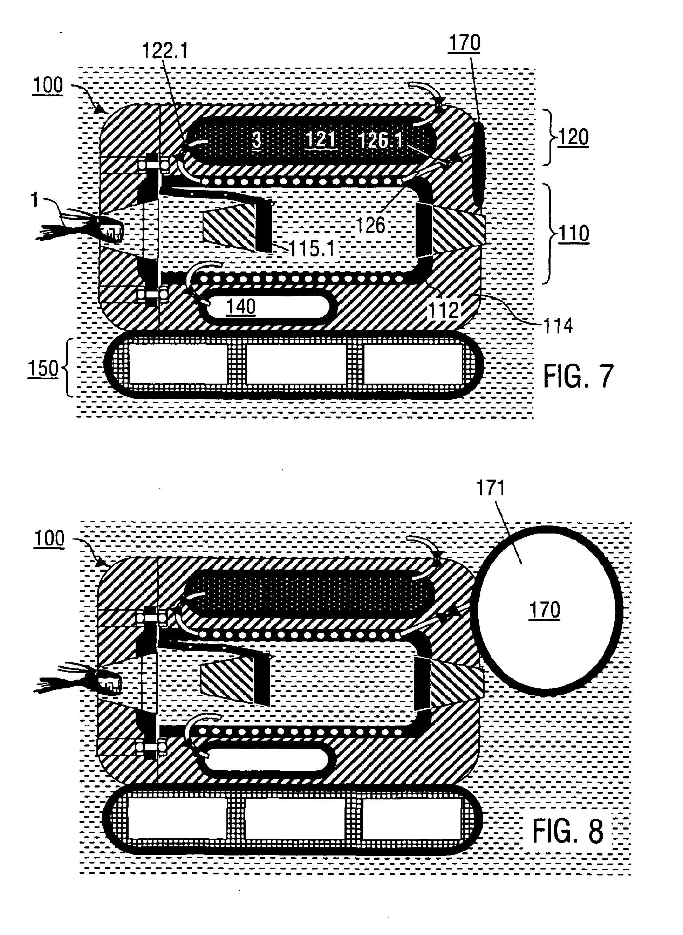

Die Figuren 7 und 8 illustrieren schematisch eine weitere Ausführungsform der Konservierungsvorrichtung 100, die mit einer Auftriebseinrichtung 170 ausgestattet und im Übrigen wie die Ausführungsform gemäß Figur 5 aufgebaut ist. Die Konservierungsvorrichtung 100 mit der Fangeinrichtung 110, der Kühleinrichtung 120, der Präparationseinrichtung 140, der Steuereinrichtung 150 und der Auftriebseinrichtung 170 ist in Figur 7 in einem Zustand mit geöffnetem Deckel 115.1 kurz vor Aufnahme des Tiefsee-Fisches 1 dargestellt. In diesem Zustand befindet sich das Kühlmittel 3 noch im Kühlmittelbehälter 121, wobei die Ventile 122.1 und 126.1 geschlossen sind. Die Auslassleitung 126 ist mit der Auftriebseinrichtung 170 verbunden.

Die Auftriebseinrichtung 170 umfasst ein Auftriebsgefäß 171, das auf der Außenseite der Innenwand 112 oder (wie dargestellt) auf der Außenseite der Außenwand 114 so angeordnet ist, dass es bei Beaufschlagung mit einem Innendruck nach außen ausgedehnt oder entfaltet werden kann. Das Auftriebsgefäß 171 umfasst zum Beispiel einen Ballon aus einem nachgiebigen, insbesondere bei tiefen Temperaturen elastisch deformierbaren Material, zum Beispiel Silikon oder Gummi oder einen Faltkörper aus Metall- oder Kunststofflamellen (Faltenbalg). In Figur 7 ist der kollabierte Zustand der Auftriebseinrichtung 170 vor Beginn der Kühlung schematisch als ovale Scheibe und in Figur 8 ist der ausgedehnte oder entfaltete Zustand der Auftriebseinrichtung 170 gezeigt, der während der Kühlung gebildet wird.

Beim erfindungsgemäßen Konservierungsverfahren drückt vor Beginn der Kühlung der hydrostatische Außendruck zunächst die Auftriebseinrichtung 170 (Figur 7) zusammen. Nach Beginn der Kühlung, insbesondere nach dem Öffnen der Ventile 122.1, 126.1 dringt das Kühlmedium durch die Kühlleitung 125 und die Auslassleitung 126 in den Innenraum der Auftriebseinrichtung 170 ein. Durch den Wärmeaustausch in der Innenwand 112 oder spätestens beim Austritt in die Auftriebseinrichtung 170 wird das Kühlmedium gasförmig, so dass die Auftriebseinrichtung 170 ausgedehnt oder entfaltet wird. Die Erfinder haben festgestellt, dass selbst bei dem hohen hydrostatischen Druck in der Tiefsee ein ausreichend hoher Druck zur Entfaltung der Auftriebseinrichtung 170 erreicht wird. Das verdrängte Volumen des Seewassers im Außenbereich liefert einen Auftrieb, der zum Auftauchen der Konservierungsvorrichtung 100 führt.

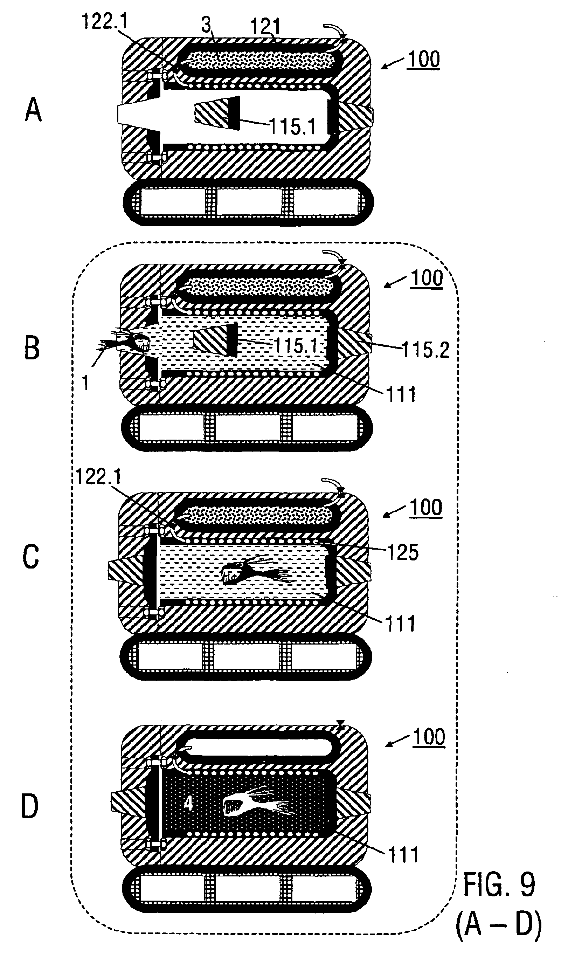

Die Figuren 9A bis 9G illustrieren weitere Einzelheiten des erfindungsgemäßen Konservierungsverfahrens. Der gestrichelte Rahmen um die Figuren 9B bis 9D markiert die in der Tiefsee bzw. unter erhöhtem hydrostatischem Druck ausgeführten ausgeführten Verfahrensschritte. Figur 9A zeigt die Konservierungsvorrichtung 100 vor dem Eintauchen in den Ozean. In diesem Zustand ist der Deckel 115.1 geöffnet. Der Kühlmittelbehälter 121 ist mit dem Kühlmittel 3, zum Beispiel flüssigem Stickstoff betankt. Das Ventil in der Zufuhrleitung 122 ist geschlossen.

Figur 9B zeigt den Zustand der Konservierungsvorrichtung 100 in der Tiefsee, zum Beispiel in einer Tiefe von 6000 m. Der Tiefsee-Fisch 1 wird bei weiterhin geöffnetem Deckel 115.1 in die Kammer 111, zum Beispiel durch einen Botenstoff, eine Lichtquelle oder einen Köder gelockt. Alternativ können beide Deckel 115.1, 115.2 geöffnet sein und der Tiefsee-Fisch 1 in die Kammer 111 eingespült werden.

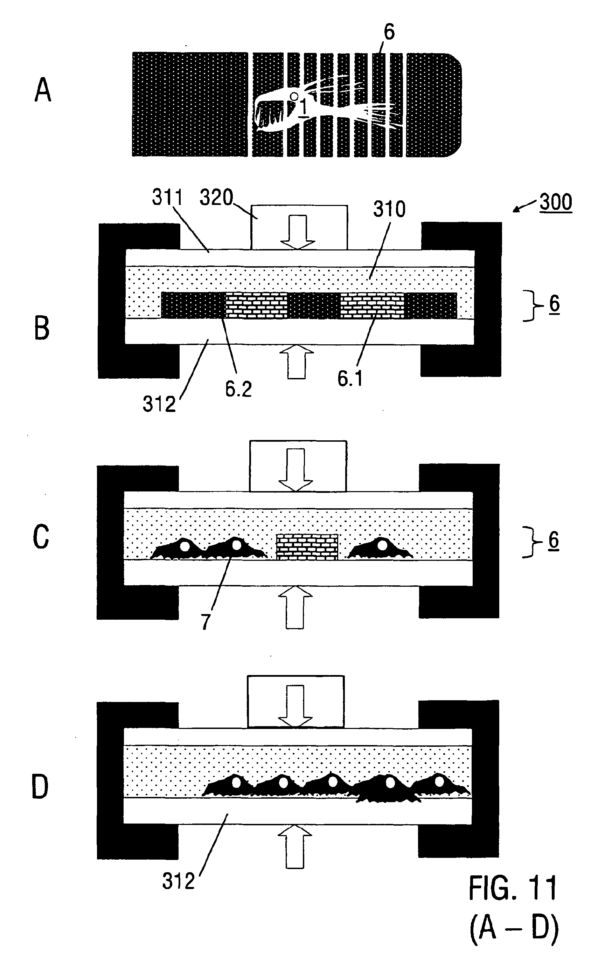

Wird die Aufnahme des Tiefsee-Fisches 1 in der Kammer 111 detektiert, wird die Kammer 111 verschlossen (Figur 9C). In diesem Zustand kann das Kryoprotektivum (siehe Figur 5) in die Kammer 111 geleitet werden. Anschließend wird die Kühlung eingeschaltet. Das Zufuhr-Ventil 122.1 wird geöffnet, so dass das Kühlmedium in die Kühlleitung 125 eindringt. Das Innere der Kammer 111 wird bis zur Vereisung gekühlt und zu einem Festkörper 4 gefroren (Figur 9D). In dem in Figur 9D gezeigten Zustand erfolgt das Auftauchen der Konservierungsvorrichtung 100 zur Oberfläche des Ozeans, zum Beispiel auf ein Schiff und von diesem in ein Laboratorium. Als Festkörper 4 ist der Innenraum der Kammer 111 druckunabhängig und kryokonserviert zur Oberfläche überführbar. Der gefrorene Tiefsee-Fisch 1 ist zwar nach gegenwärtigem Kenntnisstand nicht vollständig konservierbar. Er enthält jedoch Zellen, die durch die Kryokonservierung in ihrem lebensfähigen Zustand bleiben und bei nachfolgenden Verfahrensschritten (siehe unten, Figur 11) kultiviert werden. Durch die erfindungsgemäße Überführung des Tiefsee-Fisches 1 in den gefrorenen Zustand besteht vorteilhafterweise kein Zeitdruck während des Transports und den weiteren Schritten in der Umgebung mit Normaldruck.

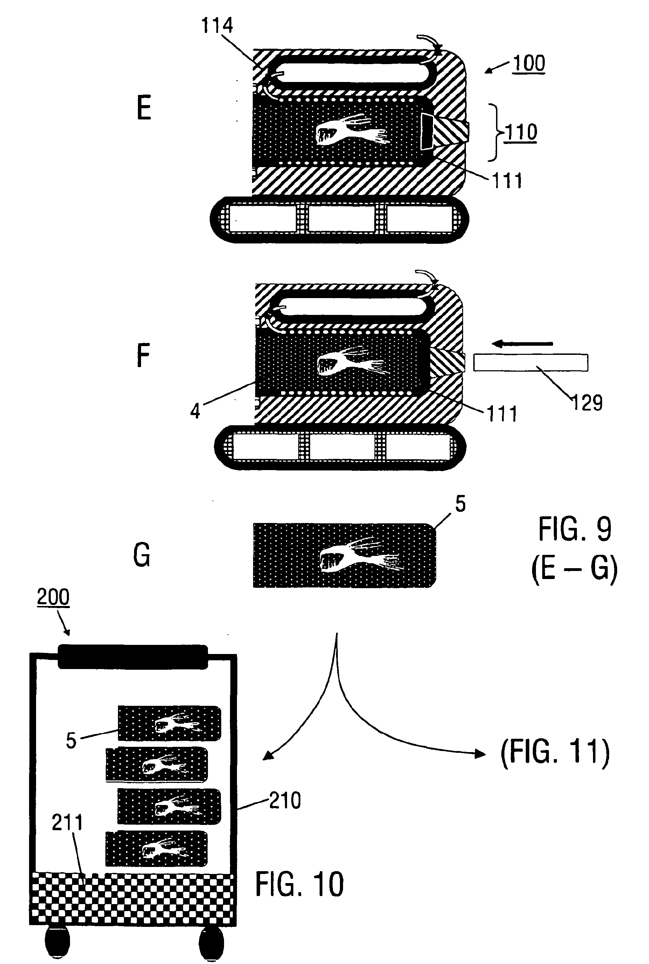

An der Oberfläche kann die Fangeinrichtung 110 der Konservierungsvorrichtung 100 in einer kalten Umgebung geöffnet werden. Hierzu wird ein Teil der Außenwand 114 und die Vorderwand der Kammer 111 abgenommen (Figur 9E). Mit einem Werkzeug, zum Beispiel einem Stempel 129 kann der gefrorene Festkörper 4 aus der Kammer 111 herausgedrückt werden (Figur 9F), um eine isolierte gefrorene Probe 5, bestehend aus dem Seewasser und mindestens einem biologischen Organismus zu bilden (Figur 9G).

Im weiteren Verfahren bestehen verschiedene Möglichkeiten, die schematisch in den Figuren 10 und 11 illustriert sind. Gemäß Figur 10 kann die gefrorene Probe 5 in einer Kryokonservierungsvorrichtung 200 abgelegt werden. Die Kryokonservierungsvorrichtung 200 umfasst zum Beispiel einen an sich bekannten Kryotank 210 mit einem flüssigen Kühlmittel 211, zum Beispiel flüssigen Stickstoff, in dessen Dampf die gefrorene Probe 5 gelagert wird. Die Kryokonservierung biologischer Proben ist an sich bekannt, so dass weitere Einzelheiten hier nicht beschrieben werden.

Unmittelbar nach der Gewinnung der Probe 5 (Figur 9G) oder nach der Kryokonservierung (Figur 10) kann eine Zerlegung der Probe 5 und eine Kultivierung von Zellen aus der Probe 5 vorgesehen sein, wie schematisch in den Figuren 11A bis 11D dargestellt ist. Gemäß Figur 11A wird die Probe 5 in Probenschnitte 6 zerlegt. Jeder Probenschnitt 6 umfasst eine Scheibe des gefrorenen Festkörpers mit einer Dicke von zum Beispiel 10 µm bis 10 mm, die gefrorenes Seewasser und ein Gewebesegment des Tiefsee-Fisches 1 enthält. Die Zerlegung der Probe 5 erfolgt bei Temperaturen unterhalb des Gefrierpunkts, insbesondere bei einer Temperatur im Bereich von -30°C bis -140°C. In diesem Temperaturbereich treten keine Veränderungen an den Zellen auf. Es kann zwar durch die Druckentlastung eine Umkristallisierung in Festkörper erfolgen, durch die jedoch, insbesondere bei Penetration des Organismus mit einem Kryoprotektivum, die Lebensfähigkeit der gefrorenen Zellen nicht beeinflusst wird. Eventuelle nachteilige Einflüsse durch die Umkristallisierung werden durch den Zusatz des Kryoprotektivums vor dem Einfrieren vermindert.

Anschließend wird ein Probenschnitt 6, bestehend aus Zellen 6.1 und Seewasser 6.2 in eine Kultivierungsvorrichtung 300 eingebracht (Figur 11B). Die Kultivierungsvorrichtung 300 umfasst eine Kammer 310 mit einem schichtförmigen, sich im Wesentlichen zweidimensional erstreckenden Innenvolumen, in dem der Probenschnitt 6 angeordnet ist. Die Kultivierungskammer 310 wird durch Deck- und Bodenplatten 311, 312 begrenzt. Mit einem piezoelektrischen Druckerzeuger 320 kann im Inneren der Kultivierungskammer 310 ein Druck von bis zu 100 MPa erzeugt werden. In diesem Zustand kann die Kühlung des Probenschnitts 6 beendet werden. Die Temperatur steigt über den Gefrierpunkt des Probenschnitts 6, so dass dieser auftaut und Zellen 7 (vergrößert illustriert, Figur 11C) freisetzt. Im weiteren Verfahren können die Zellen 7 im adhärenten Zustand auf der Bodenplatte 312 kultiviert werden (Figur 11D). Hierzu kann die Bodenplatte 312 auf ihrer Innenseite beschichtet sein, wie es an sich von der herkömmlichen Zellkultivierung bei Normaldruck bekannt ist. Es ist beispielsweise eine Laminin- oder Fibronektin-Beschichtung vorgesehen. Die Zellen aus der Kultivierungskammer 310 können im weiteren Verfahren in weitere Kultivierungskammern mit ggf. geänderten Kulturmedien überführt werden, um eine stabile Zellkultur zu bilden. Für biologische Organismen mit einer erhöhten Drucktoleranz kann die Kultivierung bei einem verminderten Druck, zum Beispiel bei Normaldruck erfolgen.

Die Erfindung bietet die folgenden Vorteile. Mit der Konservierungsvorrichtung wird ein Einfriergerät für den Tiefseeeinsatz geschaffen, das weitestgehend ohne Druckstabilisierung aufgebaut sein kann. Eventuell komprimierbare Gasvolumina in der Konservierungsvorrichtung sind minimiert. Die Konservierungsvorrichtung stellt ein weitgehend oder vollständig druckunabhängiges System dar. Vorteilhafterweise wird die Drucktoleranz vitaler Zellen durch die Kryokonservierung in der Tiefsee erreicht. Weitere Vorteile ergeben sich aus der Vermeidung des Zeitdrucks, der bei herkömmlichen Techniken zur Handhabung von Tiefsee-Organismen aufgetreten ist und aus der Präparation der Zellen der Organismen im tiefgefrorenen Zustand. Von besonderem Vorteil ist, dass Zellen aus den erfindungsgemäß gefangenen Organismen ohne Vitalitätsverlust, insbesondere durch eine Zerlegung des Organismus, in einen unter Druck leicht kultivierbaren Zustand überführt werden können.

Die in der vorstehenden Beschreibung, den Zeichnungen und den Ansprüchen offenbarten Merkmale der Erfindung können sowohl einzeln als auch in Kombination für die Verwirklichung der Erfindung in ihren verschiedenen Ausgestaltungen von Bedeutung sein.

## Patentansprüche

1. Verfahren zur Konservierung von mindestens einem biologischen Organismus (1) in der Tiefsee, umfassend die Schritte:
- Aufnahme des biologischen Organismus (1) mit einer Fangeinrichtung (110) in der Tiefsee,
- Kühlung des biologischen Organismus (1) mit einer Kühleinrichtung (120), wobei der biologische Organismus (1) in einen gefrorenen Zustand überführt wird, und
- Bewegung des gefrorenen biologischen Organismus (1) in eine Umgebung mit Normaldruck.

2. Verfahren gemäß Anspruch 1, bei dem
- der biologische Organismus (1) gemeinsam mit Seewasser (2) in einer Kammer (111) der Fangeinrichtung (110) eingefroren wird.

3. Verfahren gemäß einem der vorhergehenden Ansprüche, bei dem
- die Aufnahme des biologischen Organismus (1) ein Anlocken und/oder ein aktives Einspülen des biologischen Organismus (1) in die Fangeinrichtung (110) umfasst,
- die Kühlung eine Einleitung eines fluiden Kühlmedium (3) in eine hohle Innenwand (112) der Fangeinrichtung (110), und/oder eine Bildung eines thermischen Kontakts von einem Kühlmedium (3) über mindestens eine Wärmebrücke (123) mit einer Innenwand (112) der Fangeinrichtung (110) umfasst,
- die Bewegung der Fangeinrichtung (110) durch Auftrieb erfolgt, der durch eine Überführung von Kühlmedium (13) in einen gasförmigen Zustand bewirkt wird,
- die Kühlung in der Umgebung mit Normaldruck aufrechterhalten wird, und/oder
- die Bewegung des gefrorenen biologischen Organismus (1) in die Umgebung mit Normaldruck eine Bewegung der Fangeinrichtung (110) mit dem gefrorenen biologischen Organismus (1) in die Umgebung mit Normaldruck umfasst.

4. Verfahren gemäß Anspruch 3, bei dem
- die Einleitung eine Verdrängung eines fluiden Füllmediums aus der hohlen Innenwand (112) der Fangeinrichtung (110) umfasst, und/oder
- die Kühlung zu einem vorbestimmten Kühlbeginn eingeschaltet wird.

5. verfahren gemäß Anspruch 4, bei dem:
- das Einschalten der Kühlung in Abhängigkeit von einem Signal einer Sensoreinrichtung (130) betätigt wird.

6. Verfahren gemäß einem der vorhergehenden Ansprüche, mit mindestens einem der Schritte:
- Detektion des biologischen Organismus (1) in der Fangeinrichtung (110),
- Zugabe eines Kryoprotektivums in die Fangeinrichtung (110),
- Zerlegung des biologischen Organismus (1) im gefrorenen Zustand unter Normaldruck, und
- Auftauen des biologischen Organismus (1) oder von Teilen des biologischen Organismus (1) unter Normaldruck oder unter erhöhtem Druck.

7. Verfahren gemäß Anspruch 6, mit dem Schritt:
- Kultivierung des biologischen Organismus (1) oder von Teilen des biologischen Organismus (1) unter Normaldruck oder unter erhöhtem Druck.

8. Konservierungsvorrichtung (100), die zur Konservierung von mindestens einem biologischen Organismus (1) in der Tiefsee eingerichtet ist, umfassend:
- eine Fangeinrichtung (110), die zur Aufnahme des biologischen Organismus (1) in der Tiefsee eingerichtet ist, und
- eine Kühleinrichtung (120), die zur Kühlung des biologischen Organismus (1) in einen gefrorenen Zustand eingerichtet ist.

9. Konservierungsvorrichtung gemäß Anspruch 8, bei der
- die Fangeinrichtung (110) eine thermisch isolierte Kammer (111) aufweist, und/oder
- die Fangeinrichtung (110) mindestens einen Deckel (115.1, 115.2) aufweist, der zum Inneren der Fangeinrichtung (110) öffnet.

10. Konservierungsvorrichtung gemäß Anspruch 9, bei der
- die Kammer (111) ohne Druckfestigkeit gegenüber hydrostatischem Druck in der Tiefsee aufgebaut ist.

11. Konservierungsvorrichtung gemäß einem der Ansprüche 8 bis 10, die umfasst:
- eine Sammeleinrichtung (160), die eine Lockeinrichtung, die zum Anlocken des biologischen Organismus (1) in die Fangeinrichtung (110) eingerichtet ist, und/oder eine Spüleinrichtung aufweist, die zum Einspülen des biologischen Organismus (1) in die Fangeinrichtung (110) eingerichtet ist,
- eine Sensoreinrichtung (130), die zur Detektion des biologischen Organismus (1) eingerichtet ist,
- eine Präparationseinrichtung (140), die zur Bereitstellung vorbestimmter Konservierungsbedingungen eingerichtet ist, und/oder
- eine Auftriebseinrichtung (170), die zur Einstellung des Auftriebs der Konservierungsvorrichtung (100) eingerichtet ist.

12. Konservierungsvorrichtung gemäß einem der Ansprüche 8 bis 11, bei der die Kühleinrichtung (120) umfasst:
- einen Kühlmittelbehälter (121) zur Aufnahme eines fluiden Kühlmittels.

13. Konservierungsvorrichtung gemäß Anspruch 12, bei der
- der Kühlmittelbehälter (121) über mindestens eine Zufuhrleitung (122) und/oder über mindestens eine Wärmebrücke (123) mit einer Innenwand (122) der Fangeinrichtung (110) verbunden ist.

14. Konservierungsvorrichtung gemäß Anspruch 13, bei der
- die mindestens eine Zufuhrleitung (122) und/oder die mindestens eine Wärmebrücke (123) eingerichtet sind, zu einem vorbestimmten Kühlbeginn eingeschaltet zu werden, um jeweils entsprechend das fluide Kühlmittel durchzuleiten und/oder eine Wärmekopplung zu bilden.

15. Konservierungsvorrichtung gemäß Anspruch 11, bei der die Auftriebseinrichtung (170) umfasst
- ein Auftriebsgefäß (171) zur Aufnahme von gasförmigem Kühlmedium (3.1), und/oder
- Auftriebs- und/oder Ballastkörper.

16. Konservierungsvorrichtung gemäß Anspruch 15, bei der
- das Auftriebsgefäß (171) eine nachgiebige Gefäßwand aufweist und auffaltbar ist.

17. Verwendung der Kryokonservierung zur Bergung von biologischen Organismen in der Tiefsee.

## Claims

1. A method for conserving at least one biological organism (1) in the deep sea, comprising the steps:
- collecting the biological organism (1) with a trapping device (110) in the deep sea,
- cooling the biological organism (1) with a cooling device (120), wherein the biological organism (1) being converted into a frozen state, and
- moving the frozen biological organism (1) into surroundings under normal pressure.

2. The method according to claim 1, in which the biological organism (1) is frozen together with seawater (2) in a chamber (111) of the trapping device (110).

3. The method according to either one of the preceding claims, in which
- collecting the biological organism (1) comprises luring and/or actively flushing the biological organism (1) into the trapping device (110),
- the cooling comprises introducing a fluid cooling medium (3) into a hollow internal wall (112) of the trapping device (110) and/or forming a thermal contact via at least one thermal bridge (123) between a cooling medium (3) and an internal wall (112) of the trapping device (110),
- moving the trapping device (110) results from buoyancy, which is effected by conversion of cooling medium (13) into a gaseous state,
- cooling is maintained in the surroundings under normal pressure, and/or
- moving the frozen biological organism (1) into the surroundings under normal pressure involves moving the trapping device (110) with the frozen biological organism (1) into the surroundings under normal pressure.

4. The method according to claim 3, in which
- the introducing step comprises displacing a fluid filling medium from the hollow internal wall (112) of the trapping device (110), and/or
- cooling is switched on at a predetermined start of cooling.

5. The method according to claim 4, in which:
- cooling is switched on as a function of a signal from a sensor device (130).

6. The method according to any one of the preceding claims, with at least one of the steps:
- detecting the biological organism (1) in the trapping device (110),
- adding a cryoprotectant to the trapping device (110),
- breaking up the biological organism (1) in the frozen state under normal pressure, and
- thawing the biological organism (1) or parts of the biological organism (1) under normal pressure or under elevated pressure.

7. The method according to claim 6, with the step:
- culturing the biological organism (1) or parts of the biological organism (1) under normal pressure or under elevated pressure.

8. A conservation apparatus (100), which is configured for conserving at least one biological organism (1) in the deep sea, comprising:
- a trapping device (110), which is adapted for accomodating the biological organism (1) in the deep sea, and
- a cooling device (120), which is adapted for cooling the biological organism (1) into a frozen state.

9. The conservation apparatus according to claim 8, in which
- the trapping device (110) comprises a thermally insulated chamber (111), and/or
- the trapping device (110) comprises at least one lid (115.1, 115.2) which opens to the interior of the trapping device (110).

10. The conservation apparatus according to claim 9, in which
- the chamber (111) is constructed without pressure resistance against the hydrostatic pressure in the deep sea.

11. The conservation apparatus according to any one of claims 8 to 10, which comprises:
- a collecting device (160), which comprises a lure device, which is adapted for luring the biological organism (1) into the trapping device (110), and/or a flushing device, which is adapted for flushing the biological organism (1) into the trapping device (110),
- a sensor device (130), which is adapted for detecting the biological organism (1),
- a preparation device (140), which is adapted for providing predetermined conservation conditions, and/or
- a buoyancy device (170), which is adapted to establish the buoyancy of the conservation apparatus (100).

12. The conservation apparatus according to any one of claims 8 to 11, in which the cooling device (120) comprises:
- a coolant tank (121) for accommodating a fluid coolant.

13. The conservation apparatus according to claim 12, in which
- the coolant tank (121) is connected via at least one feed line (122) and/or via at least one thermal bridge (123) to an internal wall (122) of the trapping device (110).

14. The conservation apparatus according to claim 13, in which
- the at least one feed line (122) and/or the at least one thermal bridge (123) is/are adapted to be switched on at a predetermined start of cooling, in order correspondingly in each case to convey the fluid coolant and/or form a thermal coupling.

15. The conservation apparatus according to claim 11, in which the buoyancy device (170) comprises
- a buoyancy vessel (171) for accommodating gaseous cooling medium (3.1), and/or
- buoyancy and/or ballast elements.

16. The conservation apparatus according to claim 15, in which
- the buoyancy vessel (171) comprises a resilient vessel wall and is unfoldable.

17. Use of cryoconservation for the retrieval of biological organisms in the deep sea.

## Revendications

1. Procédé de conservation d'au moins un organisme biologique (1) dans l'étage abyssal, comprenant les étapes suivantes :
- capture de l'organisme biologique (1) en milieu abyssal au moyen d'un dispositif de capture (110),
- réfrigération de l'organisme biologique (1) au moyen d'un dispositif de réfrigération (120), l'organisme biologique (1) étant mis dans un état de congélation, et
- transfert de l'organisme biologique (1) congelé vers un environnement sous pression atmosphérique.

2. Procédé selon la revendication 1, où
- l'organisme biologique (1) est congelé avec l'eau de mer (2) dans un compartiment (111) du dispositif de capture (110).

3. Procédé selon l'une des revendications précédentes, où
- la capture de l'organisme biologique (1) comprend un amorçage et/ou un refoulement actif de l'organisme biologique (1) dans le dispositif de capture (110),
- la réfrigération comprend le déversement d'un agent réfrigérant (3) fluide dans une paroi intérieure (112) creuse du dispositif de capture (110), et/ou la formation d'un contact thermique d'un agent réfrigérant (3) avec une paroi intérieure (112) du dispositif de capture (110), par le biais d'au moins un pont thermique (123),
- le déplacement du dispositif de capture (110) par poussée hydrostatique est provoqué par un passage de l'agent réfrigérant (13) à l'état gazeux,
- la réfrigération est maintenue sous pression atmosphérique dans l'environnement, et/ou
- le déplacement de l'organisme biologique (1) congelé vers l'environnement sous pression atmosphérique comprend un déplacement du dispositif de capture (110) avec l'organisme biologique (1) congelé vers l'environnement sous pression atmosphérique.

4. Procédé selon la revendication 3, où
- le déversement comprend le refoulement d'un agent de remplissage fluide hors de la paroi intérieure (112) creuse du dispositif de capture (110), et/ou
- la réfrigération est activée à un moment de début de réfrigération défini.

5. Procédé selon la revendication 4, où :
- l'activation de la réfrigération est déclenchée en fonction d'un signal d'un dispositif de capteur (130).

6. Procédé selon l'une des revendications précédentes, avec au moins une des étapes suivantes :
- détection de l'organisme biologique (1) dans le dispositif de capture (110),
- ajout d'un cryoprotecteur dans le dispositif de capture (110),
- découpe de l'organisme biologique (1) à l'état congelé sous pression atmosphérique, et
- décongélation de l'organisme biologique (1) ou de parties de l'organisme biologique (1) sous pression atmosphérique ou sous pression élevée.

7. Procédé selon la revendication 6, avec l'étape de :
- culture de l'organisme biologique (1) ou de parties de l'organisme biologique (1) sous pression atmosphérique ou sous pression élevée.

8. Dispositif de conservation (100), prévu pour la conservation d'au moins un organisme biologique (1) dans l'étage abyssal, comprenant :
- un dispositif de capture (110) prévu pour la capture de l'organisme biologique (1) en milieu abyssal, et
- un dispositif de réfrigération (120) prévu pour la réfrigération de l'organisme biologique (1) jusqu'à un état de congélation.

9. Dispositif de conservation selon la revendication 8, où
- le dispositif de capture (110) comporte un compartiment (111) thermiquement isolé, et/ou
- le dispositif de capture (110) comporte au moins un couvercle (115.1, 115.2) s'ouvrant sur l'intérieur du dispositif de capture (110).

10. Dispositif de conservation selon la revendication 9, où
- le compartiment (111) est monté dans l'étage abyssal sans résistance à la pression hydrostatique.

11. Dispositif de conservation selon l'une des revendications 8 à 10, comprenant :
- un dispositif de collecte (160), comportant un dispositif d'amorçage prévu pour l'amorçage de l'organisme biologique (1) dans le dispositif de capture (110), et/ou un dispositif de refoulement, prévu pour le refoulement de l'organisme biologique (1) vers le dispositif de capture (110),
- un dispositif de capteur (130) prévu pour la détection de l'organisme biologique (1),
- un dispositif de préparation (140), prévu pour la mise en place de conditions de conservation définies, et/ou
- un dispositif de poussée hydrostatique (170), prévu pour régler la poussée hydrostatique du dispositif de conservation (100).

12. Dispositif de conservation selon l'une des revendications 8 à 11, où le dispositif de réfrigération (120) comprend :
- un réservoir de réfrigérant (121) destiné à contenir un agent réfrigérant fluide.

13. Dispositif de conservation selon la revendication 12, où
- le réservoir de réfrigérant (121) est relié par au moins une conduite d'amenée (122) et/ou par au moins un pont thermique (123) à une paroi intérieure (122) du dispositif de capture (110).

14. Dispositif de conservation selon la revendication 13, où
- le ou les conduites d'amenée (122) et/ou le ou les ponts thermiques (123) sont prévus pour être activés à un moment de début de réfrigération défini, pour conduire en conséquence l'agent réfrigérant fluide et/ou former un couplage thermique.

15. Dispositif de conservation selon la revendication 11, où le dispositif de poussée hydrostatique (170) comprend
- un récipient de poussée (171) destiné à contenir un agent réfrigérant gazeux (3.1), et/ou
- un corps de poussée et/ou de lest.

16. Dispositif de conservation selon la revendication 15, où
- le récipient de poussée (171) comporte une paroi de récipient déformable et est compactable.

17. Utilisation de la cryoconservation pour la récupération d'organismes biologiques dans l'étage abyssal.
